# EUROPEAN PATENT SPECIFICATION

(11) **EP 2 545 291 B1**
(45) Date of publication and mention of the grant of the patent: **21.01.2015**
(21) Application number: 11718779.9
(22) Date of filing: 10.03.2011
(51) Int. Cl.: F16B 33/02, F16B 25/00

(54) **THREAD-FORMING ELEMENT, PARTICULARLY FOR HOLES MADE IN COLD-DEFORMABLE MATERIALS**
GEWINDEFORMENDES ELEMENT, INSBESONDERE FÜR BOHRUNGEN IN KALTUMFORMBAREN MATERIALIEN
ELÉMENT DE FORMAGE DE FILETS, PARTICULIÈREMENT POUR DES TROUS RÉALISÉS DANS DES MATÉRIAUX DÉFORMABLES À FROID

(30) Priority: 11.03.2010 IT PV20100004
(43) Date of publication of application: 16.01.2013
(73) Proprietor: Bongiorno, Teresa Celsa, 27025 Gambolò (PV) (IT); Sala, Ilaria Clara, 27025 Gambolò (PV) (IT)
(72) Inventor: SALA, Carlo Vittorio, 27025 Gambolò (PV) (IT)
(74) Representative: Modiano, Micaela Nadia
(86) International application number: PCT/IB2011/051018
(87) International publication number: WO 2011/111023

(56) References cited:
- DE-A1- 19 525 732
- FR-A1- 2 329 886
- US-A1- 2002 042 302

## Description

### Technical Field

The present invention relates to a thread-forming element, particularly for holes made in cold-deformable materials, according to the preamble of claim 1. Such a thread-forming element is known from DE 195 25 732 A1.

### Background Art

Threaded elements are known which, by means of screw/female screw coupling, couple two or more elements together.

In particular, these threaded elements, commonly known as screws, have a cylindrical shape with a circular base with a helical thread cut into the outer surface. The outer thread of the screw mates with an inner thread, i.e. female screw, of a nut or of a hole, where this female screw has the same geometric properties as the outer thread of the screw, thus making the respective surfaces of the teeth of each thread adhere.

The threaded elements of the known type are widely used in many and varied fields of application and consequently an extensive industrial mass production is required. The screw and female screw threads are therefore made with different machine tools, which respectively take the name of threading die and threading tap, and which are subject to wear.

The threaded elements of the known type are not without drawbacks, among which is the fact that the mass production of such threaded elements tends to mix elements obtained with different degrees of precision, i.e. obtained with machine tools in which the degree of wear is variable over the production run, with the consequence that the coupling obtainable between screw and female screw is imperfect, leaving small spaces between the teeth of the two threads. These spaces, which are due to imperfections in production, introduce a level of play between the two threaded elements and if the two threaded elements are subjected to thermal shocks or vibrations, as a consequence the screw tends to unscrew from the female screw, thus not ensuring the initial tightening.

For preventing this drawback and ensuring a tight coupling between the two threading elements, a dimensional check is carried out on the threads, separating screws and female screws, so as to ensure a constant interference between the two elements.

This division between screws requires a cost of checking that is too high and would not justify the use of threaded elements of this type.

This drawback of the known type of threaded devices is resolved by interposing, between the screw and the female screw, an adhesive, better known as "thread locker", which allows the complete dampening of the mechanical stresses.

A drawback that can be found in this known technique is the necessity of inserting a processing step which, as a consequence, leads to additional production cost. Moreover, if the screw/female screw are to be uncoupled, the adhesive could exert an opposing force which is such as to not permit the operator to remove the screw from its seat, leading to the damaging of the head of the screw and consequently to the impossibility of extracting the screw itself.

These drawbacks of very strong tightening are overcome by the use of self-tapping screws, which create the female screw, into which they are to be screwed, inside a hole of suitable dimensions.

The threading elements of the known type are not without drawbacks, which include the fact that the screws create a female screw during their screwing by the removal of material, and consequently they form shavings which, if not removed, will damage the crests of the threads that have just been formed. Moreover the female screws that are formed cannot be coupled with traditional screws and this prevents the use of a screw with a standard-defined thread if the self-tapping screw is to be substituted.

Moreover, a particular form of self-tapping screw with a cylindrical body with a cross section having a plurality of lobes creates an excellent coupling between the screw and the hole, but at the same time it creates a female screw of poor quality which, in the event of a second screwing of the same self-tapping screw, could damage the female screw, making it unusable.

What is more, the holes which accommodate self-tapping screws must have an extremely precise mechanical tolerance, so as to be able to obtain a correct screwing of the screw into the hole.

### Disclosure of the Invention

The aim of the present invention is to provide a thread-forming element, particularly for holes made in cold-deformable materials, which resolves the drawbacks and overcomes the limitations of the background art by making it possible to obtain a screw/female screw coupling that is resistant to mechanical stresses.

Within this aim, an object of the present invention is to provide a thread-forming element that does not require the interposition of adhesives between the screw and the female screw.

Another object of the invention is to provide a threading element that produces a female screw, during its screwing into the hole, which also accommodates screws of the known type.

This aim and these objects, as well as others which will become more evident hereinafter, are achieved by a thread-forming element, particularly for holes made in cold-deformable materials, comprising a cylindrical body with a circular cross-section which has on at least part of its outer surface a helical thread, said helical thread extending in proximity to at least one conical end of said cylindrical body, said end having on its surface at least one tapping element, said tapping element having a hexahedral shape with a triangular base.

### Brief description of the drawings

Further characteristics and advantages of the invention will become more apparent from the description of a preferred, but not exclusive, embodiment of a thread-forming element, particularly for holes made in cold-deformable materials, illustrated by way of non-limiting example in the accompanying drawings wherein:
Figure 1 is a side elevation view of a first embodiment of a thread-forming element according to the invention;
Figure 2 is a right-facing end elevation view of Figure 1;

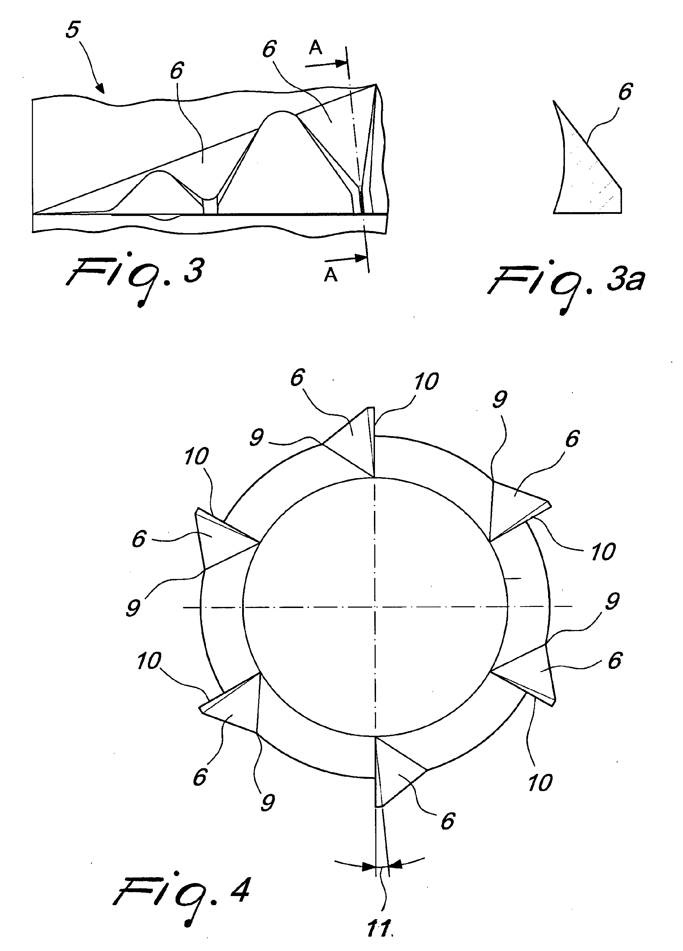

Figure 3 is an enlarged scale view of a detail of Figure 1;
Figure 3a is a cross-sectional view of Figure 3, taken along the plane marked A-A;
Figure 4 is an enlarged scale schematic view of the tapping elements shown in Figure 2;
Figure 5 is an enlarged-scale schematic view of a screw/female screw coupling executed with the thread-forming element, according to the invention;
Figure 6 is an enlarged-scale schematic view of a screw/female screw coupling executed with known thread-forming elements;

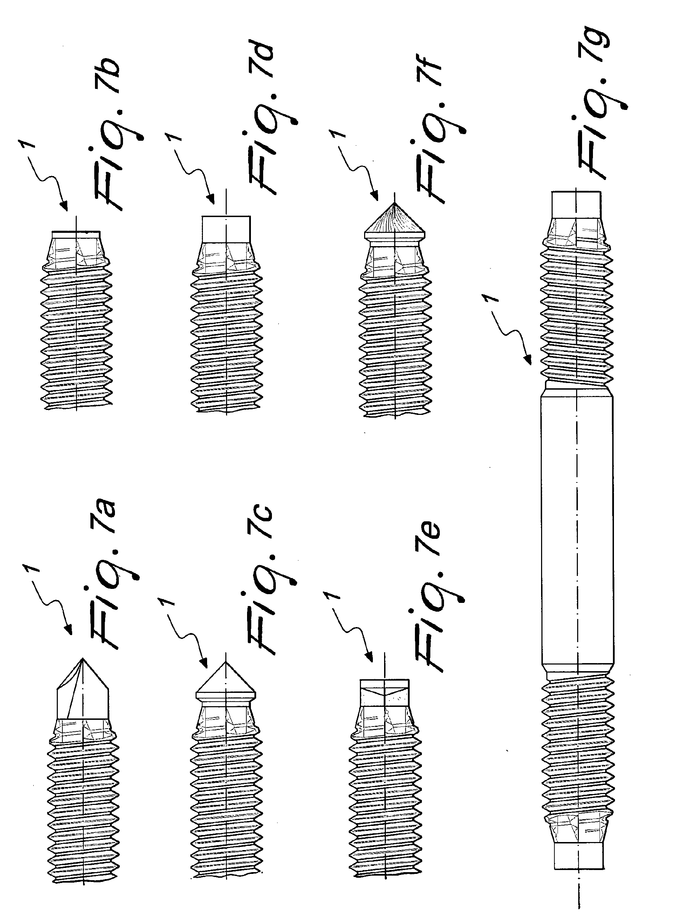

Figures 7a, 7b, 7c, 7d, 7e, 7f, 7g are a schematic view of a plurality of embodiments, according to the invention.

### Ways of carrying out the invention

With reference to the figures, the thread-forming element, generally indicated with the reference numeral 1, comprises a cylindrical body 2 with a circular cross-section which has, on at least part of the outer surface, a helical thread 4. The cylindrical body 2, furthermore, comprises at least one end 5 on which the helical thread 4 runs. The end 5 has a conical shape with a larger cylindrical base facing the cylindrical body 2.

According to the invention, the end 5 has on its surface at least one tapping element 6 which has a hexahedral shape with a triangular base.

Advantageously, the end 5 is provided with a plurality of mutually spaced tapping elements 6. Specifically, their arrangement on the end 5 follows an angular configuration corresponding to the helical thread 4 which is present on the body 2, radially **spreading out with respect to the** axis of extension 7 of the cylindrical body 2 preferably at a constant angle.

Conveniently, the height of the tapping elements 6 is progressive along the axis of extension 7 and comprised between a minimum height, which is almost negligible with respect to the conical surface of the end 5, and a maximum height, which is substantially not greater than the depth of the helical thread 4. In particular, the maximum height of the tapping elements 6 is found in proximity to the helical thread 4, while on the opposite side of the end 5, where there is a terminal cylindrical section 8, the height of the tapping elements 6 is minimal. In particular, the terminal cylindrical section 8 has a diameter smaller than the minor diameter of the helical thread 4 and conveniently smaller than the diameter of the hole 12 in which the thread-forming element is to be inserted.

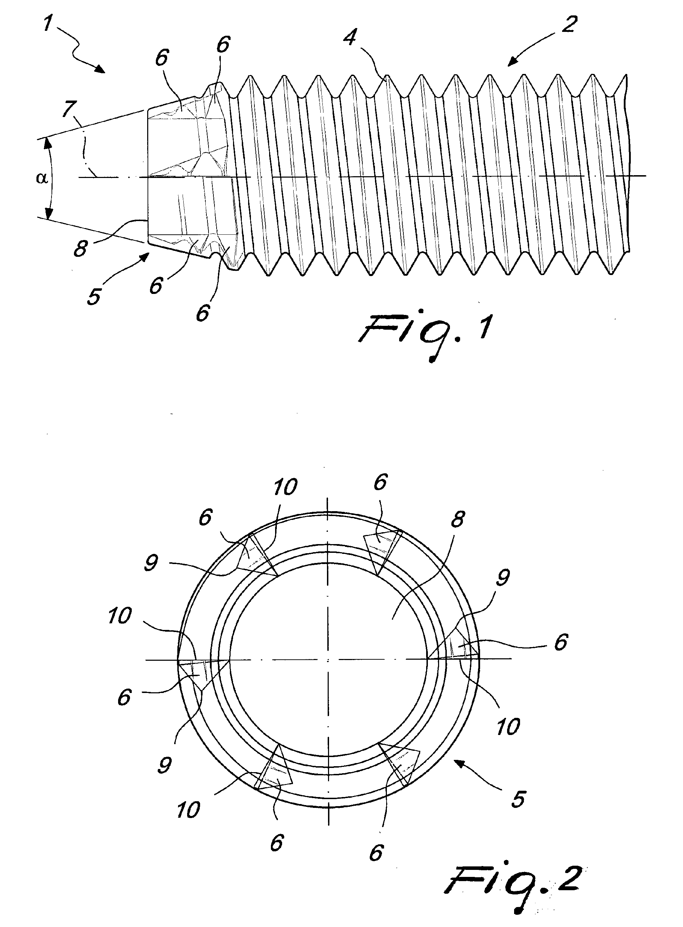

The tapping elements 6 have, at their triangular base, an edge 9 arranged along the end 5 according to a concentric spiral about the axis of extension 7, as shown in Figure 2. These edges 9 are also oriented according to the direction of rotation of the helical thread 4.

More simply, the edge 9 faces a clockwise direction if the helical thread is right-handed, and the edge 9 faces an anticlockwise direction if the thread is left-handed. The triangular bases have a face 10 opposite the edge 9 which, conveniently, prevents the unthreading of the helical thread.

The functioning of the thread-forming element is described below.

The thread-forming element 1 is inserted into a hole 12, previously formed in a cold-deformable material, such as for example steel, alloys of aluminum, magnesium, copper, by introducing as the first element the terminal cylindrical section 8 the diameter of which is smaller than the diameter of the hole 12 to be threaded. Conveniently, the diameter of the hole 12 is substantially similar to the average diameter of the helical thread 4. In particular, the holes 12 to be threaded have a much wider tolerance than the tolerance required by holes for self-tapping screws of the known type, since the coupling is free from play.

The progressive screwing of the threading element 1 enables the formation of a helical thread inside the hole 12 thanks to the presence of the tappers 6 arranged on the end 5.

Indeed, the tappers 6 do not perform a removal of material from the hole 12, thus creating shavings, but plastically deform the material in which they create the thread. The tapping elements 6 plastically cold-deform the material in which the hole 12 is present. This plastic cold-deformation strengthens the material itself, thus strengthening the obtainable female screw.

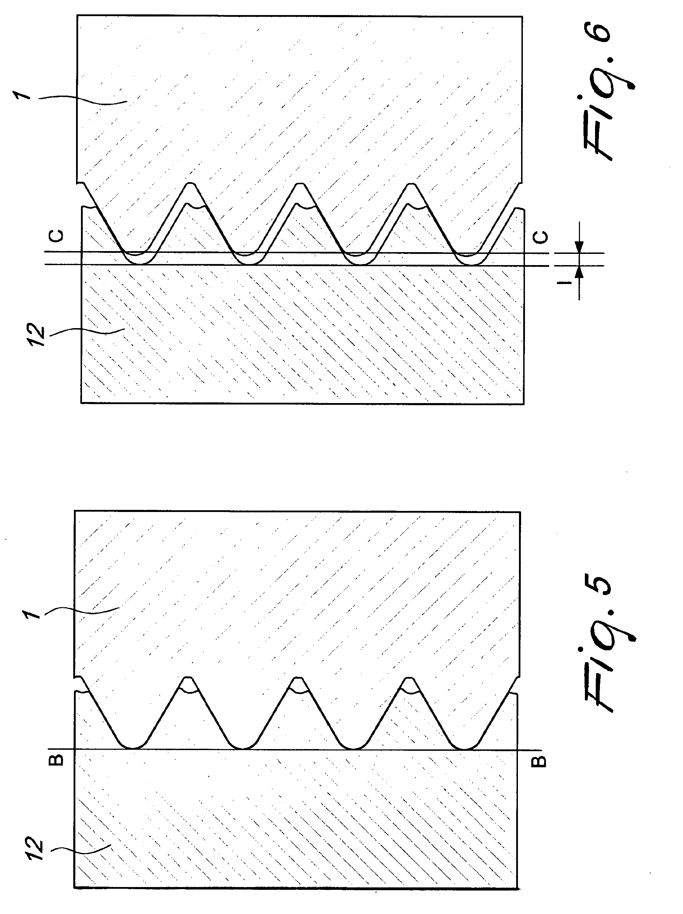

The hole 12 that accommodates the self-threading element will be, after the element has been screwed into it, smaller in diameter than the original diameter. This plastic deformation, which is a form of work-hardening, enables near-perfect adherence between the screw and the female screw just formed, as shown in Figure 5. The perfect adherence between the self-threading element 1 and the threaded hole 12 enables the complete exclusion of spaces in which mechanical stresses can propagate such as thermal shocks or vibrations, thus ensuring a tight coupling.

The inclination of the tapping elements 11 facilitates the formation of the thread and increases its resistance to the force that tends to unscrew the helical thread 4. Tightening and loosening maneuvers, if kept within the terms of torsion load of normal use, can be executed an indefinite number of times, since the threading of the female screw improves, becoming structurally increasingly compact from the pressure of the screw and subject to an ongoing work-hardening.

Advantageously, the self-threading element 1 can be produced with traditional machines, with horizontal screw-pressing machines or rolling screw-cutting machines, the dies and taps of which are composed of sintered tungsten and are produced by electrolysis.

In practice it has been found that the self-threading element, particularly for holes made in cold-deformable materials, according to the present invention, achieves the set aim and objects in that it makes it possible to obtain a screw/female screw coupling that is perfectly adherent and resistant to mechanical stresses.

Another advantage of the self-threading element, according to the invention, consists in that it does not require the interposition of adhesives between the screw and the female screw.

A further advantage of the self-threading element, according to the invention, consists in that it produces a female screw, during its screwing into the hole, which is also suitable to accommodate screws of the known type.

In addition, all the details may be replaced by other, technically equivalent elements.

In practice the materials employed, provided they are compatible with the specific use, as well as the contingent dimensions and shapes, may be any according to the requirements.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A thread-forming element (1), particularly for holes made in cold-deformable materials, comprising a cylindrical body (2) with a circular cross-section which has on at least part of its outer surface a helical thread (4), said helical thread (4) extending in proximity to at least one conical end (5) of said cylindrical body (2), said end (5) having on its surface at least one tapping element (6), said tapping element having a triangular base, **characterized in that** said tapping element has a hexahedral shape.

2. The thread-forming element (1) according to the above claim, **characterized in that** it comprises a plurality of tapping elements (6) which are mutually equidistant radially along an axis of extension (7) of said cylindrical body (2) and arranged according to an angular configuration corresponding to said helical thread (4).

3. The thread-forming element (1) according to claims 1 and 2, **characterized in that** the height of said tapping elements (6) is progressive along said axis of extension (7) and comprised between a minimum height and a maximum height, said minimum height being almost negligible with respect to the conical surface of said end (5) and said maximum height, at said thread, being substantially not greater than the depth of said helical thread (4).

4. The thread-forming element (1) according to one or more of the preceding claims, **characterized in that** said cylindrical body (2) has a terminal cylindrical section (8) the diameter of which is smaller than the minor diameter of said helical thread (4).

5. The thread-forming element (1) according to one or more of the preceding claims, **characterized in that** said triangular bases of said plurality of tapping elements (6) have respective edges (9) arranged according to a concentric spiral about said axis of extension (7).

6. The thread-forming element (1) according to one or more of the preceding claims, **characterized in that** said triangular bases of said plurality of tapping elements (6) have said edges (9) oriented according to the direction of rotation of said helical thread (4) and a face (10) opposite said edges (9) which is adapted to prevent the unscrewing of said helical thread (4).

## Patentansprüche

1. Ein Gewinde formendes Element (1), insbesondere für Löcher in kaltformbaren Materialien, das einen zylindrischen Körper (2) mit einem kreisförmigen Querschnitt umfasst, der auf zumindest einem Teil seiner äußeren Oberfläche ein Schraubengewinde (4) hat, wobei sich das Schraubengewinde (4) in Proximität zu mindestens einem konischen Ende (5) des zylindrischen Körpers (2) erstreckt, wobei das Ende (5) auf seiner Oberfläche mindestens ein Gewindeschneidelement (6) hat, wobei das Gewindeschneidelement eine dreieckige Basis hat, **dadurch gekennzeichnet, dass** das Gewindeschneidelement eine sechsflächige Form hat.

2. Das Gewinde formende Element (1) gemäß dem obigen Anspruch, **dadurch gekennzeichnet, dass** es eine Vielzahl von Gewindeschneidelementen (6) umfasst, die radial entlang einer Erstreckungsachse (7) des zylindrischen Körpers (2) äquidistant zueinander und entsprechend einer Winkelanordnung angeordnet sind, die dem Schraubengewinde (4) entspricht.

3. Das Gewinde formende Element (1) gemäß Anspruch 1 und 2, **dadurch gekennzeichnet, dass** die Höhe der Gewindeschneidelemente (6) entlang der Erstreckungsachse (7) progressiv ist und zwischen einer minimalen Höhe und einer maximalen Höhe liegt, wobei die minimale Höhe mit Bezug auf die konische Oberfläche des Endes (5) fast vernachlässigt werden kann und die maximale Höhe, an dem Gewinde, in Wesentlichen nicht größer ist als die Tiefe des Schraubengewindes (4).

4. Das Gewinde formende Element (1) gemäß einem oder mehreren der obigen Ansprüche, **dadurch gekennzeichnet, dass** der zylindrische Körper (2) einen zylindrischen Endabschnitt (8) hat, dessen Durchmesser kleiner ist als der kleinere Durchmesser des Schraubengewindes (4).

5. Das Gewinde formende Element (1) gemäß einem oder mehreren der obigen Ansprüche, **dadurch gekennzeichnet, dass** die dreieckigen Basen der Vielzahl von Gewindeschneidelementen (6) entsprechende Kanten (9) haben, die in einer konzentrischen Spirale um die Erstreckungsachse (7) angeordnet sind.

6. Das Gewinde formende Element (1) gemäß einem oder mehreren der obigen Ansprüche, **dadurch gekennzeichnet, dass** die dreieckigen Basen der Vielzahl von Gewindeschneidelementen (6) die Kanten (9) in die Drehrichtung des Schraubengewindes (4) ausgerichtet und eine Fläche (10) gegenüber den Kanten (9) haben, die ausgebildet ist, um das Herausschrauben des Schraubengewindes (4) zu verhindern.

## Revendications

1. Elément pour former un filetage (1), en particulier pour des trous réalisés dans des matériaux déformables à froid, comprenant un corps cylindrique (2) avec une section transversale circulaire qui a, au moins sur une partie de sa surface externe, un filetage hélicoïdal (4), ledit filetage hélicoïdal (4) s'étendant à proximité d'au moins une extrémité conique (5) dudit corps cylindrique (2), ladite extrémité (5) ayant sur sa surface au moins un élément de taraudage (6), ledit élément de taraudage ayant une base triangulaire, **caractérisé en ce que** ledit élément de taraudage a une forme d'hexaèdre.

2. Elément pour former un filetage (1) selon la revendication précédente, **caractérisé en ce qu'**il comprend une pluralité d'éléments de taraudage (6) qui sont mutuellement à équidistance radialement le long d'un axe d'extension (7) dudit corps cylindrique (2) et agencés selon une configuration angulaire correspondant audit filetage hélicoïdal (4).

3. Elément pour former un filetage (1) selon les revendications 1 et 2, **caractérisé en ce que** la hauteur desdits éléments de taraudage (6) est progressive le long dudit axe d'extension (7) et comprise entre une hauteur minimum et une hauteur maximum, ladite hauteur minimum étant presque négligeable par rapport à la surface conique de ladite extrémité (5) et ladite hauteur maximum, au niveau dudit filetage, étant sensiblement non supérieure à la profondeur dudit filetage hélicoïdal (4).

4. Elément pour former un filetage (1) selon une ou plusieurs des revendications précédentes, **caractérisé en ce que** ledit corps cylindrique (2) a une section cylindrique terminale (8), dont le diamètre est plus petit que le diamètre mineur dudit filetage hélicoïdal (4).

5. Elément pour former un filetage (1) selon une ou plusieurs des revendications précédentes, **caractérisé en ce que** lesdites bases triangulaires de ladite pluralité d'éléments de taraudage (6) ont des bords (9) respectifs agencés selon une spirale concentrique autour dudit axe d'extension (7).

6. Elément pour former un filetage (1) selon une ou plusieurs des revendications précédentes, **caractérisé en ce que** lesdites bases triangulaires de ladite pluralité d'éléments de taraudage (6) ont lesdits bords (9) orientés selon la direction de rotation dudit filetage hélicoïdal (4) et une face (10) opposée auxdits bords (9) qui est adaptée pour empêcher le dévissage dudit filetage hélicoïdal (4).
